# EUROPEAN PATENT SPECIFICATION

(11) **EP 2 840 196 B1**
(45) Date of publication and mention of the grant of the patent: **08.06.2016**
(21) Application number: 14181514.2
(22) Date of filing: 20.08.2014
(51) Int. Cl.: E04B 1/90, E04B 1/74

(54) **A production process of a thermo-acoustic insulating board and boards obtained with such process**
Herstellungsverfahren einer thermoakustischen Dämmplatte und mit solch einem Verfahren erhaltene Platten
Procédé de production d'un panneau d'isolation thermo-acoustique et planches obtenues avec ce procédé

(30) Priority: 23.08.2013 IT AN20130155
(43) Date of publication of application: 25.02.2015
(73) Proprietor: Ruggeri, Jacopo, 09036 Guspini (CA) (IT)
(72) Inventor: Ducato, Anna, 09036 Guspini (CA) (IT); Ducato Ruggeri, Leonardo, 09036 Guspini (CA) (IT)
(74) Representative: Baldi, Claudio

(56) References cited:
- WO-A1-2010/000983

## Description

The present application patent for industrial invention relates to a production process of a thermo-acoustic insulating board.

The present invention has been developed in the field of the boards used in the building sector to improve the thermo-acoustic insulation of residential and working spaces, reduce noise pollution, avoid heat dispersion and reduce energy consumption.

The market currently offers insulating boards of different types, according to the material used to produce them.

In particular, the so-called "mixed" insulating boards, which are made of both natural and synthetic materials, are largely used.

Such a type of boards includes plasterboard panels that, in spite of being normally used for partition walls and/or false ceilings, can guarantee good thermo-acoustic insulation when combined with polystyrene panels.

Although they provide a good thermo-acoustic insulation, such insulating panels are expensive, are not environmental-friendly and are impaired by low breathability.

WO2010/000983 discloses a thermo-acoustic insulating board made from Posidonia.

The purpose of the present invention is to remedy the drawbacks of the prior art by devising a production process of thermo-acoustic insulating boards that are inexpensive, natural and able to guarantee high breathability and high performance.

The process of the invention for the realization of a thermo-acoustic insulating board comprises the following steps:
(1) to place Posidonia in sheep's wool felts;
(2) to wait for Posidonia to mature, leaving it inside said felts for at least three months in order to eliminate sand traces, absorb residual humidity and reduce salinity;
(3) to extract Posidonia from said felts;
(4) to shear Posidonia;
(5) to prepare a formwork;
(6) to press Posidonia inside said formwork so that the fibers adhere mutually and are held together;
(7) to wait for at least 48 hours before extracting the thermo-acoustic insulating board from said formwork.

The thermo-acoustic insulating board obtained with the process of the invention guarantees high performance in terms of energy efficiency during the entire solar year thanks to the properties of the Posidonia used to obtain the thermo-acoustic insulating board.

Specifically, the thermo-acoustic insulating board obtained with the process of the invention has the following features:
- thermal conductivity equal to 0.035 ± 0.001 W/mK;
- volume mass equal to 100 Kg/m³;
- specific heat of 2.512 J/KgK;
- diffusion coefficient of aqueous vapor equal to 3.6 µ.

More precisely, with the same material density, the use of Posidonia allows for achieving a performance that cannot be achieved with other natural insulating materials.

Consequently, the thermo-acoustic insulating board that is obtained with the process of the invention using a smaller amount of material guarantees a better performance in terms of energy efficiency compared to the thermo-acoustic insulating boards made with natural insulating materials that are currently available on the market.

In fact, it must be noted that the thermo-acoustic panel obtained with the process of the invention has low transmission values that result in reduced heat dispersion, with consequent energy saving during the winter season. Moreover, said thermo-acoustic board has such an attenuation factor value that it guarantees excellent heat protection during the summer season.

In view of the above, the use of these thermo-acoustic boards considerably reduces energy consumption both during the summer and the winter season, with consequent energy and money saving.

Additional advantages are obtained from the optional features of the invention, which are the object of the dependent claims, which are to be considered as an integral part of the present description.

For explanatory reasons, the description of the process according to the present invention continues with reference to the attached drawings, which only have an illustrative, not limiting value, wherein:

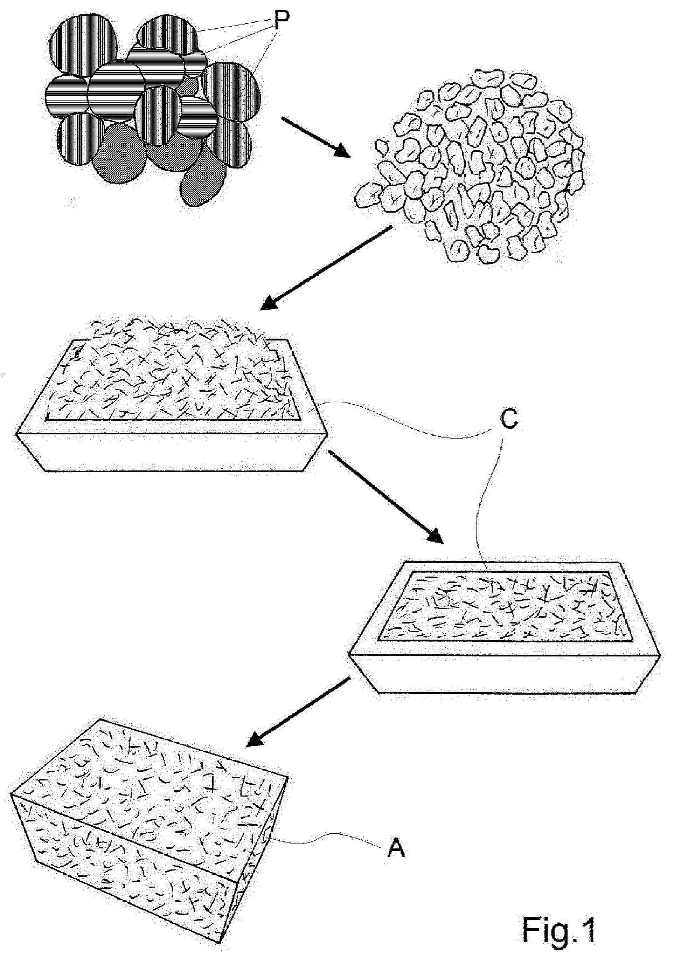

- Fig. 1 is a diagrammatic view of the steps comprised in the process of the invention, according to which a thermo-acoustic board is obtained from Posidonia.

With reference to Fig. 1, the production process of a soft thermo-acoustic insulating board (A) comprises the following operational steps:
(1) to place Posidonia (P) in sheep's wool in felts;
(2) to wait for Posidonia (P) to mature, leaving it inside said felts for at least three months in order to eliminate sand traces, absorb residual humidity and reduce salinity;
(3) to extract Posidonia (P) from said felts;
(4) to shear Posidonia (P);
(5) to prepare a formwork (C);
   (5a) to close the formwork (C) with a cover and to needle felt Posidonia (P) inside the formwork (C);
(6) to press Posidonia (P) inside said formwork (C) so that the fibers adhere mutually;
(7) to wait for at least 3 days before extracting the thermo-acoustic insulating board (A) from said formwork (C).

The process of the invention for the realization of a rigid thermo-acoustic insulating panel (A) comprises the following steps:
(1) to place Posidonia (P) in sheep's wool felts;
(2) to wait for Posidonia (P) to mature, leaving it at least for three months inside said felts in order to eliminate sand traces, absorb residual humidity and reduce salinity;
(3) to extract Posidonia (P) from said felts;
(4) to shear Posidonia (P);
(5) to prepare a formwork (C);
   (5b) to spray a mixture made of vegetable starch diluted in water on Posidonia (P) contained in the formwork (C);
(6) to press Posidonia (P) inside said formwork (C) so that the fibers adhere mutually;
(7) to wait for at least 10 days before extracting the thermo-acoustic insulating board (A) from said formwork (C).

The process of the invention for the realization of a soft thermo-acoustic insulating board (A) that contains wool comprises the following operational steps:
(1) to place Posidonia (P) in sheep's wool felts;
(2) to wait for Posidonia (P) to mature, leaving it for at least three months inside said felts in order to eliminate sand traces, absorb residual humidity and reduce salinity;
(3) to extract Posidonia (P) from said felts;
(4) to shear Posidonia (P);
(5) to prepare a formwork (C);
   (5c) to line the formwork (C) internally with sheep's wool layer;
   (5d) to needle felt Posidonia (P) inside the formwork (C);
(6) to press Posidonia (P) inside said formwork (C) so that the fibers adhere mutually;
(7) to wait for at least 48 hours before extracting the soft thermo-acoustic insulating board (A) from said formwork (C).

The process of the invention for the realization of a rigid thermo-acoustic insulating board (A) that contains wool comprises the following operational steps:
(1) to place Posidonia (P) in sheep's wool felts;
(2) to wait for Posidonia (P) to mature, leaving it for at least three months inside said felts in order to eliminate sand traces, absorb residual humidity and reduce salinity;
(3) to extract Posidonia (P) from said felts;
(4) to shear Posidonia (P);
(5) to prepare a formwork (C);
   (5c) to line the formwork (C) internally with sheep's wool layer;
   (5d) to needle felt Posidonia (P) inside the formwork (C);
(6) to press Posidonia (P) inside the formwork (C);
   (5b) to spray a mixture made of vegetable starch diluted in water on Posidonia (P);
(7) to wait for at least 6 days before extracting the thermo-acoustic insulating board (A) from said formwork (C).

The process of the invention for the realization of a rigid thermo-acoustic insulating board (A) that contains crude earth comprises the following operational steps:
(1) to place Posidonia (P) in sheep's wool felts;
(2) to wait for Posidonia (P) to mature, leaving it for at least three months inside said felts in order to eliminate sand traces, absorb residual humidity and reduce salinity;
(3) to extract Posidonia (P) from said felts;
(4) to shear Posidonia (P);
(5) to prepare a formwork (C);
   (5e) to mix Posidonia (P) contained in the formwork with crude earth;
(6) to press Posidonia (P) inside said formwork (C) so that the fibers adhere mutually;
(7) to wait for 10 - 30 days before extracting the rigid thermo-acoustic insulating board (A) from said formwork (C).

It must be noted that the collection of raw material has been omitted in all the processes described above. The raw material is collected directly on the spot, i.e. on the beaches where Posidonia (P) is found.

Specifically, the collection step comprises vibration sifting in order to eliminate the stranded materials and the sand held inside the Posidonia.

## Claims

1. A production process of a thermo-acoustic insulating board (A) comprising the following steps:
(1) to place Posidonia (P) in sheep's wool felts;
(2) to wait for maturation of Posidonia (P), leaving it for at least three months inside said felts in order to eliminate sand traces, absorb residual humidity and reduce salinity;
(3) to extract Posidonia (P) from said felts;
(4) to shear Posidonia (P);
(5) to prepare a formwork (C);
(6) to press Posidonia (P) inside said formwork (C) so that fibers adhere mutually and are held together;
(7) to wait for at least 48 hours before extracting the thermo-acoustic insulating board (A) from said formwork (C).

2. The process of claim 1, wherein said thermo-acoustic insulating board (A) is soft; said process comprising a step (5a) between steps (5) and (6), wherein the formwork (C) is closed with a cover and the Posidonia (P) is needle felted inside said formwork (C).

3. The process of claim 2, wherein step (7) provides for waiting for 3 days before extracting the soft thermo-acoustic insulating board (A) from the formwork (C).

4. The process of claim 1, wherein said thermo-acoustic insulating board (A) is rigid; said process comprising a step (5b) between steps (5) and (6), wherein a water-diluted vegetable starch mixture is sprayed on Posidonia (P).

5. The process of claim 4, wherein said step (7) provides for waiting for at least 10 days before extracting the rigid thermo-acoustic insulating board (A) from the formwork (C).

6. The process of claim 1, wherein said thermo-acoustic insulating board (A) is soft and contains wool; said process comprising a step (5c) between steps (5) and (6), wherein the formwork (C) is internally lined with a sheep's wool layer and a step (5d), wherein Posidonia is needle felted inside said formwork (C).

7. The process of claim 1, wherein said thermo-acoustic insulating board (A) is rigid and contains wool; said process comprising a step (5c) between steps (5) and (6), wherein the formwork (C) is internally lined with a sheep's wool layer and a step (5d), wherein Posidonia is needle felted inside said formwork (C); said process comprising a step (6a) between steps (6) and (7), wherein a water-diluted vegetable starch mixture is sprayed on Posidonia (P).

8. The process of claim 7, wherein said step (7) provides for waiting for 6 days before extracting the rigid thermo-acoustic insulating board (A) that contains wool from the formwork (C).

9. The process of claim 1, wherein said thermo-acoustic insulating board (A) is rigid and contains crude earth; said process comprising a step (5e) between steps (5) and (6), wherein Posidonia (P) contained in the formwork (C) is mixed with crude earth and/or crude clay.

10. The process of claim 9, wherein said step (7) provides for waiting for 10 - 30 days before extracting the rigid thermo-acoustic insulating board (A) that contains crude earth from the formwork (C).

11. The process of any one of the preceding claims comprising a raw material collection step before step (1), which is made on beaches where Posidonia (P) can be found; said collection step providing for vibration sifting in order to eliminate any stranded materials and sand held inside Posidonia (P).

## Patentansprüche

1. Verfahren zur Herstellung einer Schallisolierungsplatte (A), umfassend folgende Schritte:
(1) Positionieren von Posidonia (P) in Schafwollfilze;
(2) Abwarten der Ablagerung der Posidonia (P) durch Belassen derselben für mindestens drei Monate im Inneren der Filze zur Beseitigung von Sandrückständen, Absorption der Restfeuchte und Verminderung der Salzhaltigkeit;
(3) Entnehmen der Posidonia (P) aus den Filzen;
(4) Scheren der Posidonia (P);
(5) Bereitstellen einer Schalung (C);
(6) Pressen der Posidonia (P) in die Schalung (C) derart, dass die Fasern aneinander haften und zusammengehalten werden;
(7) Abwarten von mindestens 48 Stunden vor dem Herausnehmen der so erhaltenen Schallisolierungsplatte (A) aus der Schalung (C);

2. Verfahren nach Anspruch 1, wobei die Schallisolierungsplatte (A) weich ist; wobei das Verfahren zwischen den Schritten (5) und (6) einen Schritt (5a) vorsieht, in dem die Schalung (C) mit einem Deckel verschlossen und die Posidonia (P) im Inneren der Schalung (C) nadelgefilzt wird.

3. Verfahren nach Anspruch 2, wobei der Schritt (7) das Abwarten von 3 Tagen vor dem Herausnehmen der weichen Schallisolierungsplatte (A) aus der Schalung (C) vorsieht.

4. Verfahren nach Anspruch 1, wobei die Schallisolierungsplatte (A) hart ist; wobei das Verfahren zwischen den Schritten (5) und (6) einen Schritt (5b) vorsieht, in dem ein aus Pflanzenstärke und Wasser bestehendes Gemisch auf die Posidonia (P) gesprüht wird.

5. Verfahren nach Anspruch 4, wobei der Schritt (7) das Abwarten von 10 Tagen vor dem Herausnehmen der harten Schallisolierungsplatte (A) aus der Schalung (C) vorsieht.

6. Verfahren nach Anspruch 1, wobei die Schallisolierungsplatte (A) weich ist und Wolle enthält; wobei das Verfahren zwischen den Schritten (5) und (6) einen Schritt (5c) vorsieht, in dem die Schalung (C) inwendig mit einer Schafswollschicht ausgekleidet wird, wobei die Posidonia (P) im Inneren der Schalung (C) nadelgefilzt wird.

7. Verfahren nach Anspruch 1, wobei die Schallisolierungsplatte (A) hart ist und Wolle enthält; wobei das Verfahren zwischen den Schritten (5) und (6) einen Schritt (5c) vorsieht, in dem die Schalung (C) inwendig mit einer Schafswollschicht ausgekleidet wird, sowie einen Schritt (5d), in dem die Posidonia (P) im Inneren der Schalung (C) nadelgefilzt wird; wobei das Verfahren zwischen den Schritten (6) und (7) einen Schritt (6a) vorsieht, in dem ein aus Pflanzenstärke und Wasser bestehendes Gemisch auf die Posidonia (P) gesprüht wird.

8. Verfahren nach Anspruch 7, wobei der Schritt (7) das Abwarten von 6 Tagen vor dem Herausnehmen der Wolle enthaltenden, harten Schallisolierungsplatte (A) aus der Schalung (C) vorsieht.

9. Verfahren nach Anspruch 1, wobei die Schallisolierungsplatte (A) hart ist und rohe Erde enthält; wobei das Verfahren zwischen den Schritten (5) und (6) einen Schritt (5e) vorsieht, in dem die in der Schalung (C) enthaltene Posidonia (P) mit Roherde und/oder Rohton vermischt wird.

10. Verfahren nach Anspruch 9, wobei der Schritt (7) das Abwarten von 10 bis 30 Tagen vor dem Herausnehmen der Roherde enthaltenden, harten Schallisolierungsplatte (A) aus der Schalung (C) vorsieht.

11. Verfahren nach einem beliebigen der vorstehenden Ansprüche, das vor dem Schritt (1) einen Schritt des Sammelns des Rohstoffs vorsieht, was an Stränden erfolgt, an denen Posidonia (P) verfügbar ist; wobei der Schritt des Sammelns einen Rüttelsiebvorgang zur Beseitigung des eventuell im Innern der Posidonia (P) angestrandeten Materials vorsieht.

## Revendications

1. Processus pour la réalisation d'un panneau isolant thermo-acoustique (A) comprenant les phases suivantes :
(1) positionner les Posidonies (P) dans des feutres de laine de mouton ;
(2) attendre le séchage des Posidonies (P) en les laissant au moins trois mois à l'intérieur des dits feutres, aux fins d'éliminer les traces de sable, d'absorber l'humidité résiduelle et réduire la salinité ;
(3) extraire les Posidonies (P) des dits feutres ;
(4) couper les Posidonies (P) ;
(5) prédisposer un coffrage (C) ;
(6) presser les Posidonies (P) dans ledit coffrage (C) de façon à ce que les fibres adhèrent entre elles et soient retenues ;
(7) attendre au moins 48 heures pour ensuite extraire le panneau isolant thermo-acoustique (A) du dit coffrage (C).

2. Processus, selon la revendication 1, où ledit panneau isolant thermo-acoustique (A) est souple ; ce processus prévoyant, entre les phases (5) et (6), une phase (5a) où le coffrage (C) est fermé avec un couvercle et les Posidonies (P) sont touffetées à l'intérieur du dit coffrage (C).

3. Processus, selon la revendication 2, où ladite phase (7) prévoit une attente de 3 jours avant d'extraire le panneau isolant thermo-acoustique (A) souple du dit coffrage (C).

4. Processus, selon la revendication 1, où ledit panneau isolant thermo-acoustique (A) est rigide ; ledit processus prévoyant, entre les phases (5) et (6), une phase (5b) pendant laquelle un mélange constitué d'amidon végétal dilué dans de l'eau est giclé sur les Posidonies (P).

5. Processus, selon la revendication 4, où ladite phase (7) prévoit une attente de 10 jours avant d'extraire le panneau isolant thermo-acoustique (A) rigide du dit coffrage (C).

6. Processus, selon la revendication 1, où ledit panneau isolant thermo-acoustique (A) est souple et contient de la laine ; ledit processus prévoyant, entre les phases (5) et (6), une première phase (5c), où le coffrage (C) est revêtu à l'intérieur avec une couche de laine de mouton et puis une phase (5d) où les Posidonies (P) sont touffetées à l'intérieur du dit coffrage (C).

7. Processus, selon la revendication 1, où ledit panneau isolant thermo-acoustique (A) est rigide et contient de la laine ; ledit processus prévoyant, entre les phases (5) et (6), une première phase (5c), où le coffrage (C) est revêtu à l'intérieur avec une couche de laine de mouton et puis une phase (5d) où les Posidonies (P) sont touffetées à l'intérieur du dit coffrage (C) ; ledit processus prévoyant entre les phases (6) et (7), une phase (6a) pendant laquelle un mélange constitué d'amidon végétal dilué dans de l'eau est giclé sur les Posidonies (P).

8. Processus, selon la revendication 7, où ladite phase (7) prévoit une attente de 6 jours avant d'extraire le panneau isolant thermo-acoustique (A) rigide, contenant de la laine, du dit coffrage (C).

9. Processus, selon la revendication 1, où ledit panneau isolant thermo-acoustique (A) est rigide et contient de la terre crue ; ledit processus prévoyant, entre les phases (5) et (6), une phase (5e) pendant laquelle les Posidonies (P) positionnées dans le coffrage (C) sont pétries avec de la terre crue et/ou de l'argile crue.

10. Processus, selon la revendication 9, où ladite phase (7) prévoit une attente de 10 à 30 jours avant d'extraire le panneau isolant thermo-acoustique (A) rigide, contenant de la terre crue, du dit coffrage (C).

11. Processus, selon l'une quelconque des revendications précédentes, qui prévoit, avant la phase (1), une phase de récolte de la matière première, effectuée sur des plages où l'on peut trouver lesdites Posidonies (P) ; ladite phase de récolte prévoyant d'effectuer un criblage à vibrations aux fins d'éliminer les éventuels matériaux déposés et le sable retenu à l'intérieur des Posidonies (P).
